# EUROPEAN PATENT APPLICATION

(11) **EP 1 273 992 A1**
(43) Date of publication of application: **08.01.2003**
(21) Application number: 01610072.9
(22) Date of filing: 06.07.2001
(51) Int. Cl.: G06F 1/00

(54) **Method and system for authorising modem dialling**

(71) Applicant: Embetrix ApS, 3460 Birkeroed (DK)
(72) Inventor: Glob, Martin, 2635 Ishoej (DK)
(74) Representative: Boesen, Johnny Peder

(57) **Abstract**

Disclosed is a method of accessing a public telephone network (104) from a computer (101) via a modem (103), wherein the computer sends a first control signal indicative of a command to dial a telephone number to the modem; and in response to the first control signal the modem dials the telephone number. According to the invention, a filter (102) detects the command to dial the telephone number in the first control signal. The filter further determines whether the telephone number corresponds to an authorised telephone number based on a list of predetermined telephone numbers, and sends the command to dial the telephone number to the modem, if the telephone number corresponds to an authorised telephone number; otherwise causing the modem not to dial the telephone number. Further disclosed are a filter device and a computer program for authorising modem dialling.

## Description

This invention relates to the accessing of a public telephone network from a computer via a modem.

Many computers allow a user to connect to a public telephone network via a modem. Such a connection allows an application running on the computer to dial up to a desired telephone number, thereby providing access to other computers which may be accessible via the telephone network. For example, a computer may connect to the Internet via an Internet Provider allowing a browser running on the computer to display web pages available on the Internet. Other examples include remote access to a company network via a dial-in connection, special services, such as home-banking, provided via a dedicated dial-in connection to a corresponding server.

Within the above-mentioned applications a number of security issues exist which may result in exposure and/or loss of data, in huge telephone bills for the owner of the telephone line, or the like. Examples of such security threats include:

A web site on the Internet may tempt an Internet user to download a small application, a so-called dialler, by promising the user access to special services. For example, and adult web site may promise free adult material. However, once downloaded, the dialler application may disconnect the current connection and subsequently dial up to either a long distance or an overcharged telephone number resulting in a high telephone bill.

Even though a web site may state the effects of the downloaded dialler application and the costs involved, many such statements are very unclear and an Internet user with limited technical knowledge may not understand the consequences of downloading such an application. Language problems may further increase the risk of misunderstandings.

An even greater threat are dialler applications which do not inform the user about the costs involved and what the dialler application actually does. Some of these applications even modify the settings stored on the user's computer, thereby modifying the normal Internet connection. Consequently, instead of dialling the telephone number of the regular Internet Provider, the calls are redirected to an overseas Internet Provider. Again, this results in high telephone bills.

One of the early examples of such dialler applications was called the "Chad scam", because it made a long distance call to the African country Chad. Many people where hit by this application, causing enormous costs. There are even dialler applications which automatically install themselves and use the modem while the computer is idle.

Today many web sites use dialler applications as an alternative for credit card payments to charge for services offered by the web site. This method has become popular because of many people's fear of using a credit card on the Internet. Unfortunately, this method does not require the knowledge of a credit card number, thereby causing the risk of unintentionally using services which are charged via the dialler application. This is a particular risk for children using the Internet.

The dialler problems described above are world wide problems, and most dialler applications work from any country, i.e. independently of, for example, special national prefixes for international calls, etc. Furthermore, most dialler programs are not detected by known anti-virus software.

Many telephone companies offer to their customers a general blocking of overcharged and long-distance calls from a given telephone number. However, this prior art method involves the problem that dialler applications may dial up to a normal telephone number and use a so-called "caller ID" feature as a basis for billing purposes. The caller ID feature provides the telephone number of the calling party to the receiving party, thereby allowing the call receiver to establish the identity of the owner of the calling telephone number. Consequently, the above prior art method may easily be circumvented. It is a further disadvantage of the above prior art method that a restricted telephone line may not be used for long-distance voice and/or fax telephone calls either. This is a particular disadvantage for customers using the same telephone line for both modem access and regular voice telephone calls.

It is further known to use a firewall for protecting a computer against adversaries. However, it is a disadvantage of a firewall, that it only protects established connections, i.e. it may protect a TCP/IP connection to an Internet provider once the connection is established.

The above and other problems are solved by a method of accessing a public telephone network from a computer via a modem, the method comprising the steps of
- sending a first control signal indicative of a command to dial a telephone number from the computer to the modem; and
- in response to the first control signal dialling the telephone number by the modem;
the method being characterised in that it further comprises the steps of
- detecting the command to dial the telephone number in the first control signal;
- determining whether the telephone number corresponds to an authorised telephone number based on a list of predetermined telephone numbers, and
- sending the command to dial the telephone number to the modem, if the telephone number corresponds to an authorised telephone number; otherwise causing the modem not to dial the telephone number.

Consequently, according to the invention, a filter mechanism is provided which only accepts calls to authorised telephone numbers, thereby providing protection against applications dialling unauthorized telephone numbers and against a resulting possible loss and/or exposure of user data or high telephone costs. Furthermore, the invention provides full control to a user as to which telephone numbers are trusted. All other calls are rejected by the filter. Therefore, the invention provides a method to fully prevent dialler applications from making calls to unwanted numbers.

It is a further advantage of the invention that the use of the telephone line for regular voice calls from a telephone is not affected by the filter, as it only affects calls via the modem.

It is a further advantage of the invention that it is easy to configure by a user, as a user only has to specify the list of predetermined telephone numbers.

It is a further advantage of the invention that the number to be called is determined before the call is actually made and, thus, any unintended charges from a telephone company are prevented.

It is a further advantage of the invention that it is secure and hard to bypass.

The term modem comprises a device which converts outgoing digital signals from a computer or other digital device to signals which may be transmitted via a telephone line, e.g. analogue signals for a conventional copper twisted pair telephone line, signals for a wireless telecommunications networks, such as GSM, GPRS, etc, or signals suitable for other media, such as IP telephony, and reconverts the incoming signal to a digital signal for the digital device. Examples of modems include external modems, internal modems, serial modems, PC Card modems, PCMCI modems, USB modems, wireless or wired modems, analogue and digital modems, such as ISDN, etc. The modem may be an internal modem, connected directly to a port of the computer, accessible via a local area network, or the like.

The term computer comprises any electronic equipment comprising a processing unit, such as a microprocessor or other circuits. Examples of computers are personal computers (PCs), handheld computers, PDAs, etc.

In a preferred embodiment of the invention, the step of causing the modem not to dial the telephone number further comprises the step of generating and sending to the modem a second control signal corresponding to the command to dial the telephone number wherein the telephone number is replaced by a predetermined sequence of identifiers. Consequently, a simple and efficient method of blocking calls to unwanted numbers is provided. According to this embodiment of the invention the modem will receive a dial command with a predetermined sequence of identifiers which does not correspond to a possible telephone number, e.g. a series of blanks, instead of the telephone number. The modem will respond according to its corresponding interface specification, for example with an error message, with a line-busy signal after an attempt to initiate a call, or the like. Hence, the filter does not need to simulate any responses from the modem, thereby providing a simple and flexible mechanism which may be used with a large variety of possible modems.

In a preferred embodiment of the invention, the method further comprises the steps of
- detecting whether a connection to the public telephone network is established via an authorised telephone number; and
- if no connection to the public telephone network is established via an authorised telephone number, sending a third control signal to the modem in predetermined time intervals, the third control signal being indicative of a command to reset the modem.

As any authorised modem access is directed through the filter mechanism according to the invention, attempts to bypass the filter may be prevented by sending reset signals to the modem when the modem is not in use by any other application. These reset commands will interfere with any commands sent directly to the modem by an adversary, thereby preventing any unauthorised calls.

When the method further comprises the step of rejecting a command to dial any predetermined telephone number stored in a storage medium of the modem, additional security is provided. Some modems provide the possibility to store predefined numbers in a storage medium of the modem. A call to one of these predefined numbers may be initiated by a predetermined command. According to this embodiment of the invention the use of a predefine telephone number stored in the modem is prevented, thereby further increasing the security of the method. Preferably, this feature is implemented as a user-configurable option.

The term storage medium comprises magnetic tape, optical disc, digital video disk (DVD), compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, PCMCIA card, etc.

When the method further comprises the step of detecting any modems connected to the computer, any attempts to reconfigure modems by an adversary may be detected. Furthermore, the configuration and reconfiguration of the method by a user is facilitated.

In a preferred embodiment of the invention the list of predetermined telephone numbers comprises a list of authorised telephone numbers. Consequently, the filtering mechanism provides an even better protection than the blocking of long distance or overcharged calls, because only dial-ups to numbers which are explicitly authorized by the user are allowed.

It is a further advantage of the invention that possibly dangerous or unwanted numbers do not have to be specified explicitly, as call attempts to all numbers which do not configure on the positive list of authorised telephone numbers are rejected by the method according to the invention.

It is a further advantage of the invention that in most cases the list of authorised telephone numbers is rather short, e.g. including the telephone number of the user's Internet Provider and the telephone numbers of possible other dial-in services, such as home-banking, which are not performed via the Internet Provider.

In another preferred embodiment of the invention, the list of predetermined telephone numbers is indicative of at least one set of telephone numbers starting with a predetermined sequence of digits; and the method comprises the step of rejecting a command to dial any telephone number of the at least one set of telephone numbers. Consequently, any calls to long-distance numbers and/or numbers with special prefixes used for overcharged calls may be disabled by the user, thereby further increasing the security of the method.

The invention further relates to a computer system comprising
- first processing means adapted to generate a first control signal indicative of a command to dial a telephone number;
- modem means adapted to dial the telephone number in response to the first control signal;
characterised in that the computer system further comprises filter means including
- input means for receiving the first control signal;
- detecting means for detecting a command to dial the telephone number in the first control signal;
- second processing means adapted to determine whether the telephone number corresponds to an authorised telephone number based on a list of predetermined telephone numbers; and to send the command to dial the telephone number to the modem, if the telephone number is an authorised telephone number; otherwise to cause the modem not to dial the telephone number.

The term processing means may comprise a microprocessor, an application-specific integrated circuit, or another integrated circuit, a smart card, a general purpose computer adapted by suitable software, or the like.

The filter means may be implemented in hardware and/or firmware, e.g. as a separate device inserted between the computer and the modem, as part of the circuitry, chip set, and/or firmware of the modem and/or the computer. Alternatively or additionally, the filter means may be implemented in software, e.g. as a computer program executed on the computer and interacting with the operating system of the computer or executed on a microprocessor of the modem.

The invention further relates to a filter device for use in a computer system including a computer and a modem, characterised in that the filter device comprises
- input means for receiving a first control signal generated by the computer;
- detecting means for detecting a command to dial a telephone number in the first control signal;
- processing means adapted to determine whether the telephone number corresponds to an authorised telephone number based on a list of predetermined telephone numbers; and to send the command to dial the telephone number to the modem, if the telephone number is an authorised telephone number; otherwise to cause the modem not to dial the telephone number.

The invention further relates to a computer program comprising code means adapted to perform, when run on a computer, the steps of
- detecting a command to dial a telephone number in a first control signal generated by the computer and sent to a modem connected to the computer;
- determining whether the telephone number corresponds to an authorised telephone number based on a list of predetermined telephone numbers, and
- sending the command to dial the telephone number to the modem, if the telephone number is an authorised telephone number; otherwise causing the modem not to dial the telephone number.

The computer program may be embodied on a storage medium, as a signal, such as a data signal, or the like.

The above-mentioned aspects of the invention are disclosed in the independent claims. As the advantages and preferred embodiments of these aspects of the invention correspond to the advantages and preferred embodiments of the method described above and in the following, these will not be repeated here.

The invention will be explained more fully below in connection with preferred embodiments and with reference to the drawings, in which:
fig. 1 shows a schematic view of a computer system according to a first embodiment of the invention;
fig. 2 shows a schematic view of a computer system according to a second embodiment of the invention;
fig. 3 shows a schematic view of a computer system according to a third embodiment of the invention;
fig. 4 shows a schematic view of a software implementation according to an embodiment of the invention; and
fig. 5 shows a flow diagram of a method according to an embodiment of the invention.

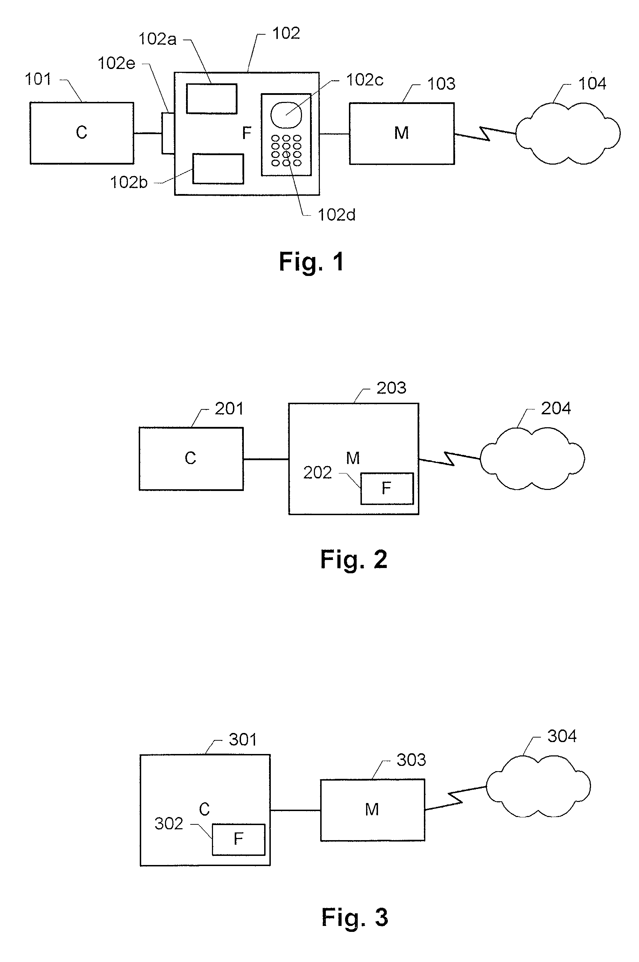

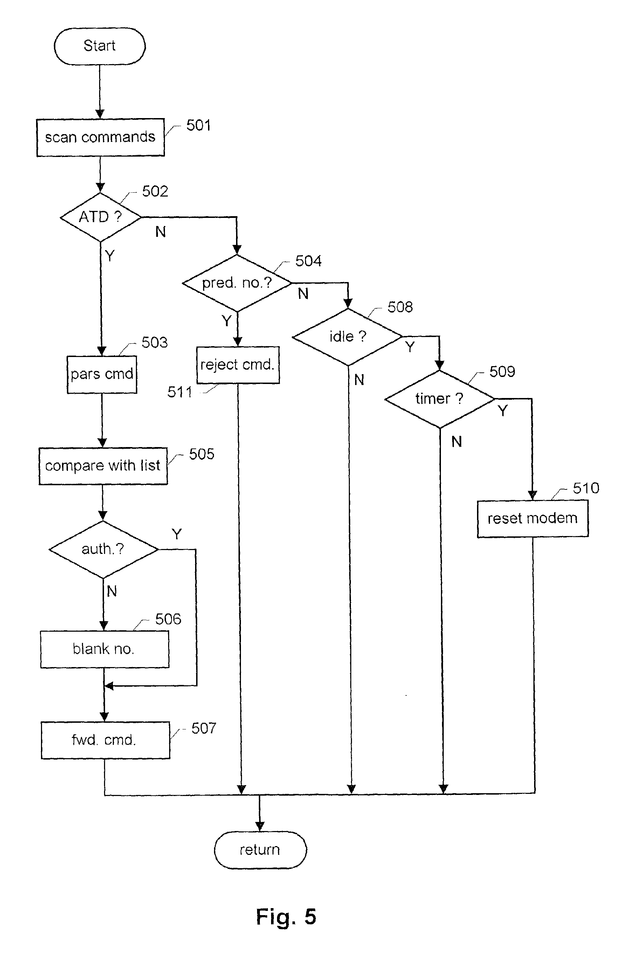

Fig. 1 shows a schematic view of a computer system according to a first embodiment of the invention. The system comprises a computer 101 which is connected to a public telephone network 104 via a modem 103. According to the invention, the computer 101 is connected to the modem via a filter unit 102. The filter unit 102 is adapted to block any calls via the modem 103 to unauthorised telephone numbers. According to the invention, the filter unit comprises a storage medium 102a, e.g. an EPROM, EEPROM, flash memory, or the like, for storing a list of authorised telephone numbers. The filter unit may further comprise a display 102c, e.g. an LED display, and a keypad 102d for entering, deleting, or editing telephone numbers on the stored list of authorised telephone numbers. Alternatively, the stored list may be edited via a software application which, when executed on the computer 101, enables a user to edit the list of authorised telephone numbers stored in the filter unit. The filter unit 102 comprises circuitry 102b, e.g. a suitable programmed microprocessor, which scans all commands sent from the computer 101 to the modem 103. When it detects a dial command to the modem, the corresponding command is parsed, and the telephone number to be dialled is extracted. The extracted telephone number is compared to the list of authorised telephone numbers stored in the storage medium 102a. If the telephone number is found on the list, the command is forwarded to the modem 103. Otherwise the command is rejected. An embodiment of a method of providing modem dialling authorisation according to the invention will be described in greater detail in connection with fig. 5. The computer 101 may be connected to the filter unit 102 via a suitable interface 102e, e.g. a serial interface using a serial port of the computer, via a USB connection, or any other suitable connection. Likewise the connection from the filter device 102 to the modem 103 may be via serial connection, a USB connection, or the like.

Fig. 2 shows a schematic view of a computer system according to a second embodiment of the invention. According to this embodiment, a filter unit 202 like the filter unit 102 described in connection with fig. 1 is implemented as part of the hardware and/or firmware of the modem 203. Consequently, the computer 201 may be connected to the modem 203 directly, i.e. via a serial connection, USB, or the like. Alternatively, the modem may be accessible via a computer network, e.g. a local area network, or it may be incorporated into the computer, e.g. as a chip set or a modem card. The modem 203, in turn, is connected to the public telephone network 204.

It is an advantage of the embodiments of figs. 1-2 that all control signals initiated by any application running on the computer have to go through the filter unit, thereby further increasing the security of the system against attempts to bypass the filter unit.

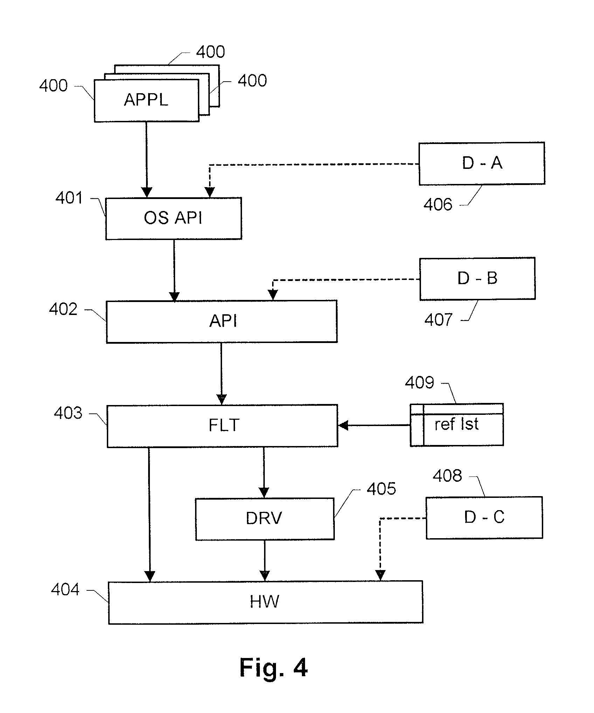

Fig. 3 shows a schematic view of a computer system according to a third embodiment of the invention. According to this embodiment, a filter unit 302 like the filter unit 102 described in connection with fig. 1 is included in the computer 301, i.e. as part of the hardware and/or firmware of the computer. Alternatively or additionally, a computer program implementing a filter according to the invention may be executed on the computer. An embodiment of such a computer program will be described in connection with figs. 4-5. Hence, similar to the embodiment of fig. 2, the computer 301 may be connected to the modem 303 directly, i.e. via a serial connection, USB, or the like. Alternatively, the modem 303 may be accessible via a computer network, e.g. a local area network, or it may be incorporated into the computer, e.g. as a chip set or a modem card. The modem 303 is connected to the public telephone network 304. It is an advantage of this embodiment that it does not require any hardware in addition to the computer and any standard modem which may be directly connected to the computer 301.

Fig. 4 shows a schematic view of a software implementation according to an embodiment of the invention. More specifically, fig. 4 shows a schematic view of an interface architecture for accessing a modem, and the operation of a filter according to the invention within this architecture. According to this embodiment of the invention, a software application 400 running on a computer may interface with the modem hardware 404 via a predefined set of high level functions provided by the operating system of the computer, e.g. the Microsoft Windows Operating system, UNIX, LINUX, or the like. Hence, these functions provide a so-called application program interface (API) 401 to the applications 400. In Microsoft Windows, examples of these functions include RAS, TAPI and the like. These functions, in turn, call low level interface functions 402 , such as OpenComm, or the like. The low-level functions, in turn, access the appropriate hardware drivers 405 which control the actual modem hardware 404. According to the invention, a filter program 403 is running on the computer, and the filter program receives all function calls from the low-level application interfaces 402. The filter 403, in turn, interfaces with the modem hardware 404 directly and/or via the appropriate modem drivers 405. Hence, all modem access from user applications 400 executed on the computer are directed through the filter 403. The filter program 403 parses all modem commands and, when a dial command is encountered, the corresponding telephone number is extracted and compared with a list 409 of authorised telephone numbers stored on the computer. Preferably, the list data 409 is encrypted in order to prevent other programs to access and/or change the authorised numbers. If the number is found on the list, the command is forwarded to the driver 405 like all other modem commands. However, if the number is not found on the list 409, the filter program 403 replaces the number by blanks and passes the modified command to the modem driver 405. This results in a line-busy situation when the modem actually attempts to initiate the dial. It is an advantage of this embodiment, that it only intrudes minimally in the communication to and from the modem, thereby reducing the risk of unintended side effects. In another embodiment, the filter 403 may not forward the dial command when an unauthorised telephone number is detected, but rather simulate a response from the modem.

According to one embodiment of the invention, where the operating system is a version of Microsoft Windows, the filter 403 may be implemented as a virtual device driver. A virtual device driver is a program which maintains the status of a hardware device with changeable settings, e.g. a hard disk drive controller, a keyboard, serial and parallel ports, etc. Virtual device drivers further handle software interrupts from the operating system.

Still referring to fig. 4, different types of dialler applications 406-408 are illustrated. The dialler 406 uses standard high-level API calls to access the modem 404, i.e. it uses the communications services 401 provided by the operating system. For example, the dialler 406 may modify the telephone number, user name, password, etc., related to an application connecting to an Internet Provider. The dialler 407 accesses the modem 404 via low-level API calls. Such a dialler can make a call to any number using any modem connected to the computer. As the commands of both of the above diallers 406 and 407 are directed through the filter 403, any attempts to call an unauthorised telephone number by dialler 406 or 407 is prevented by the filter 403 according to the invention. The dialler 408 accesses the modem 404 directly via a corresponding I/O port. Hence the dialler 408 can make a call to any number. However, the implementation of such a dialler requires an in-depth knowledge of the specific type of modem hardware available on the computer. Furthermore, since all authorised modem access is directed through the filter 403, the filter 403 may prevent unauthorised calls by the dialler 408. According to one embodiment, the filter 403 may send a reset command to the modem whenever the modem is not in use by any application interfacing the modem via the filter 403. For example a reset command may be sent in regular intervals, e.g. every seconds. Consequently, if the dialler 408 communicates with the modem 404 using direct input/output, the reset commands sent by the filter 403 will interfere with any commands sent by the dialler 408, thereby preventing the dialler 408 from making any calls.

Additionally or alternatively, the filter 403 may have access to another list (not shown) which comprises unauthorised prefixes, representing numbers starting with special sequences of digits and/or characters, such as '00', '+' or '900' corresponding to international calls, calls to charged services or the like. Hence, according to an embodiment of the invention, calls to numbers starting with the listed sequences are always blocked by the filter 403, thereby enabling a user to use e.g. a fax application running on the computer and using the modem and still get a certain level of protection against dialler applications.

It is an advantage of a software-based embodiment of the invention, that no hardware modifications need to be performed in order to install such an embodiment in connection with existing computers and/or modems.

Fig. 5 shows a flow diagram of a method according to an embodiment of the invention. According to this embodiment, all commands sent to a modem from the computer are intercepted (step 501) and analysed for possible dial commands (step 502). Most modems use a standard command set called the Hayes AT command set. According to this command set, a dial command corresponds to the ATD command of the Hayes command set, where the ATD command is followed by a telephone number. An example of such a command is "ATD5671234", corresponding to a command to dial the telephone number "5671234". Hence, if an ATD command is detected in step 502, the command is parsed in step 503 in order to extract the telephone number, including possible special characters such as '+' or the like, following the ATD command. In step 505, the extracted telephone number is compared with a list of authorised telephone numbers stored on the computer. If the telephone number is found on the list of authorised numbers, the command is forwarded unchanged to the modem (step 507), thereby causing the modem to call the number. If the number is not found on the list of authorised numbers, the telephone number in the detected ATD command is replaced with blanks (step 506), resulting in the command "ATD". The resulting changed command is then forwarded to the modem in step 507. The ATD command with a blanked number will result in a "line-busy" indication from the modem back to the application which has issued the ATD command. Hence, the unauthorised telephone number is not dialled. It is an advantage of the invention, that the application which has sent the ATD command receives a response which is not unusual for an application interfacing with a modem. Consequently, an application interfacing with a modem should have mechanisms to detect a line-busy response from a modem and react on it. It is noted, that the blocking of calls could also be implemented by simulating responses from the modem to the application which has issued the ATD command. However, replacing the digits of a telephone number with blanks has the advantage that it does not cause any interferences with the normal operation of the modem and the applications using the modem.

If no ATD command is detected in step 502, other versions of a dial command may be detected. In the example of fig. 5, this is illustrated by step 504, where an special version of the Hayes dial command, the DS command is detected. The DS command followed by an identifier, causes the modem to dial a predefined number which is stored in the modem and identified by the identifier. According to the embodiment of fig. 5, if a DS command is detected, this command is rejected by the filter (step 511). In one embodiment of the invention, the action to be taken by the filter upon detection of special dial commands may be configurable by a user. In a hardware implementation, this configuration may be performed via a user interface, e.g. a keypad, dip switches, or the like, or via a configuration program. In a software implementation of the invention, the configuration may be performed via a user interface provided by the filter application, e.g. via a set-up dialog. If no dial command is detected, in step 508 it is determined whether the modem is currently in use by any application. As all authorised modem access is routed through the filter according to the invention, the filter may detect when a modem initiates authorised calls, and when authorised calls are terminated, e.g. by detecting a hang-up command by the requesting application or a hang-up signal by the modem, or the like. When no on-going authorised calls are detected by the filter, a timer may be started and when a predetermined time is elapsed (decision 509) without an authorised call being initiated, a reset command may be sent to the modem in step 510. Hence, any attempt to bypass the filer by directly accessing the modem is interrupted by regular reset commands sent to the modem, e.g. every second or every few seconds, thereby preventing an adversary program to initiate any calls via the modem.

According to one embodiment of the invention, the filter mechanism generates log entries which, for example may be written to a log file stored on the computer. The log entries may comprise events such as the date, time, and telephone number, of any accepted and/or rejected dial commands, detected changes in modem configurations, or the like. Preferably, the log data stored in the log file is encrypted in order to prevent other programs to access and/or change the log data.

It is noted that the invention was mainly described in connection with modems used with Personal Computers running an operating systems by Microsoft Corporation, e.g. Microsoft Windows, and using a command set corresponding to the Hayes command set. However, it is understood, that the scope of the invention is not limited by this example, and that the filtering process may easily be modified to fit other types of modes, e.g. modems using another command set, and/or to other operating systems.

## Claims

1. A method of accessing a public telephone network (104,204,304) from a computer (101,201,301) via a modem (103,203,303), the method comprising the steps of
- sending a first control signal indicative of a command to dial a telephone number from the computer to the modem; and
- in response to the first control signal dialling the telephone number by the modem;
**characterised in that** the method further comprises the steps of
- detecting (502) the command to dial the telephone number in the first control signal;
- determining (505) whether the telephone number corresponds to an authorised telephone number based on a list of predetermined telephone numbers, and
- sending (507) the command to dial the telephone number to the modem, if the telephone number corresponds to an authorised telephone number; otherwise causing the modem not to dial the telephone number.

2. A method according to claim 1, **characterised in that** the step of causing the modem not to dial the telephone number further comprises the step of generating (506) and sending to the modem a second control signal corresponding to the command to dial the telephone number wherein the telephone number is replaced by a predetermined sequence of identifiers.

3. A method according to claim 1 or 2, **characterised in that** the method further comprises the steps of
- detecting whether a connection to the public telephone network is established via an authorised telephone number; and
- if no connection to the public telephone network is established via an authorised telephone number, sending (510) a third control signal to the modem in predetermined time intervals, the third control signal being indicative of a command to reset the modem.

4. A method according to any one of the claims 1 through 3, **characterised in that** the method further comprises the step (511) of rejecting a command to dial any predetermined telephone number stored in a storage medium of the modem.

5. A method according to any one of the claims 1 through 4, **characterised in that** the method further comprises the step of detecting any modems connected to the computer.

6. A method according to any one of the claims 1 through 5, **characterised in that** the list of predetermined telephone numbers comprises a list of authorised telephone numbers.

7. A method according to any one of the claims 1 through 5, **characterised in that** the list of predetermined telephone numbers is indicative of at least one set of telephone numbers starting with a predetermined sequence of digits; and the method comprises the step of rejecting a command to dial any telephone number of the at least one set of telephone numbers.

8. A computer system comprising
- first processing means (101,201,301) adapted to generate a first control signal indicative of a command to dial a telephone number;
- modem means (103,203,303) adapted to dial the telephone number in response to the first control signal;
**characterised in that** the computer system further comprises filter means (102,202,302) including
- input means (102e) for receiving the first control signal;
- detecting means (102b) for detecting a command to dial the telephone number in the first control signal;
- second processing means (102b) adapted to determine whether the telephone number corresponds to an authorised telephone number based on a list of predetermined telephone numbers; and to send the command to dial the telephone number to the modem, if the telephone number is an authorised telephone number; otherwise to cause the modem not to dial the telephone number.

9. A filter device (102,202,302) for use in a computer system including a computer and a modem, **characterised in that** the filter device comprises
- input means (102e) for receiving a first control signal generated by the computer;
- detecting means (102b) for detecting a command to dial a telephone number in the first control signal;
- processing means (102b) adapted to determine whether the telephone number corresponds to an authorised telephone number based on a list of predetermined telephone numbers; and to send the command to dial the telephone number to the modem, if the telephone number is an authorised telephone number; otherwise to cause the modem not to dial the telephone number.

10. A computer program (403) comprising code means adapted to perform, when run on a computer, the steps of
- detecting (502) a command to dial a telephone number in a first control signal generated by the computer and sent to a modem connected to the computer;
- determining (505) whether the telephone number corresponds to an authorised telephone number based on a list of predetermined telephone numbers, and
- sending (507) the command to dial the telephone number to the modem, if the telephone number is an authorised telephone number; otherwise causing the modem not to dial the telephone number.

11. A computer program according to claim 10,
**characterised in that** the computer program is embodied on a storage medium.

12. A computer program according to claim 10,
**characterised in that** the computer program is embodied in a signal.
